(19) Europäisches Patentamt
European Patent Office
Office européen des brevets

(11) **EP 2 680 552 A1**

(12) **EUROPEAN PATENT APPLICATION**

(43) Date of publication:
**01.01.2014 Bulletin 2014/01**

(51) Int Cl.:
***H04M 1/725*** *(2006.01)*

(21) Application number: **12305784.6**

(22) Date of filing: **29.06.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Orange
75015 Paris (FR)**

(72) Inventors:
• **Lecarpentier, Francois-Xavier
W6 8QG LONDON (FR)**
• **Han, Han
LONDON, SE18 4NE (GB)**
• **Ostovari, Hooman
HERTFORDSHIRE, EN5 3AP (GB)**

(54) **Transmitting of data depention on motion**

(57) The present invention discloses a mobile device (110) for transmitting data through wave transmission, the mobile device (110) comprising a motion sensor (120) and a wave emitter module (125), the mobile device (110) comprising a processor (112) arranged to receive activation of a data transmission through wave transmission, monitor motion of the electronic device using the motion sensor (120), activate the data transmission using the wave emitter module (125) when the monitored motion is below a preset motion threshold.

FIGURE 3

**Description**

**FIELD OF THE PRESENT SYSTEM:**

The present invention generally relates to mobile devices or handsets, and more specifically to mobile devices for transmitting data through carrier waves.

**BACKGROUND OF THE PRESENT SYSTEM:**

Beyond the standard broadband connectivity (WiFi, 3G...), mobile devices - and especially mobile phones - provide additional connectivity technology which are used to interconnect them in a local area. These were based on infrared in the 90's and Bluetooth in the 2000's or even pico-networks based on Zigbee. For these technologies, but the infra-red based ones, the connectivity still reaches several meters and is still quite pervasive. As a result, credentials have still to be exchanged between connected nodes to secure the data transmission.

In order to bypass the connection setup, which can be inefficient and painful for a one-off, short data exchange, some new technologies have emerged; they are referred to as near-field communication technologies. The principle is to minimize the security layers by relying on a physical proximity to establish a "safe" connection and data transfer. The underlying point is to reduce the range of connectivity by any mean to avoid any security breach. Some approaches rely on the design of the transmission itself like the nature of the media (image for barcode or 2D-codes, induction for NFC,...) or even on the energy level used during the communication (infrared, radio frequencies, ultrasound).

Some of the used technologies are restricted to a certain area by nature; this is the case for infrared light for example that is directional and cannot go through walls. However this is not sufficient to restrict the communication range within a very limited range, i.e. less than 10 centimeters, so as to preserve security. One left option would be to limit the power used during the data transmission.

However limiting the power could raise some usability issue for some basic technologies which are very limited in loopback mechanisms. This is the case if the implementation relies on a send & forget mechanism ('pure' sender and a 'pure' receiver) and that no acknowledgement feedback is implemented to actually confirm the reception of the data. If the transmitting device is too far from the receiver then the message could be lost or the implementation of a time-off may abort the transmission too early. This happens when the technology does not provide an easy way to create two separate communication channels or when for implementation cost reasons only one channel is implemented. An example of such an implementation is ultrasound based technology that relies on standard components available in devices and is limited on signal analysis capabilities.

In order to increase the transmission success rate while keeping the transmission time as short as possible to overall shorten the process, and consequently improve security, user's control becomes the single factor. Users may adjust the distance between devices and when the transmitter and receiver device are within proximity, the user can start the transmission by interacting with the application running on the device, such as clicking a button.

Examples of such transmissions may be found among solutions offering sound based transmissions, relying for instance upon Near Sound Data Transfer (NSDT). This is the case for instance with applications (e.g. mobile payments) relying upon Naratte's Zoosh™ solution that enables users to securely exchange data between devices using the speakers and microphones found on most devices. Other similar applications can be found for instance with Tagtile or Tagpay offering a secured payment solution.

Nevertheless, leaving to the user the entire control of the transmission has some issues as the user may trigger the transmission too early or too late. Indeed, the user may not know what the best to start the transmission is. He may be able to control the distance between devices, but could possibly start the transmission process through e.g. clicking on the button too early or too late. The former case may result in the transmission time-off or prolonged transmission time; while the latter case will keep both sides waiting for extra time without any data being transmitted.

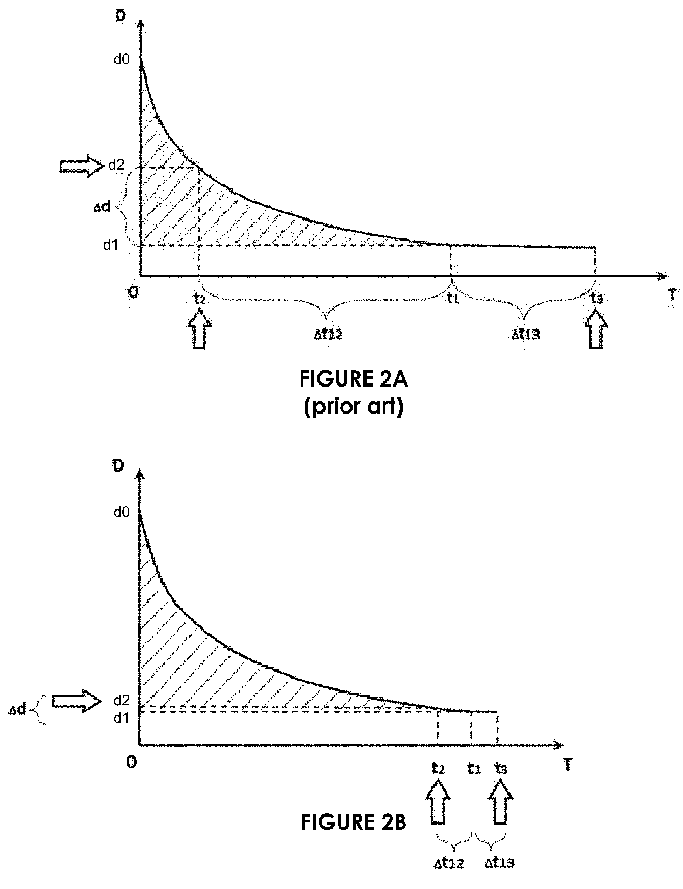

An illustration of how significant the start of transmission may be is shown in FIG. 2A. Two electronic devices are used for the transmission of data, a sender and a receiver. The transmission of data in the here after application will be a carrier wave transmission (wave transmission in short), this may be for instance a radio-wave transmission, an electromagnetic wave transmission or a sound wave transmission.

A user device, i.e. the transmitter or sender, runs an application to convert data to carrier waves (electromagnetic or air) that are transmitted to a proximate receiver, for instance an Infra Red (IR) or sound wave reader. In the graph of FIG. 2A, the X axis represents time in the transmission process while the Y axis shows the distance between the two devices, d0 being the initial distance. We assume here that the ideal transmission distance between devices is d 1. The user in the present case will move his user device towards the reader and starts the transmission when sufficiently close according to his own judgment, d2 in the present case. Taking into account the human nature of the movement, where the speed of movement reduces over time until position d1 is reached, a asymptotic curve line can be drawn roughly as shown in FIG. 2A, with user device stops the user device motion at d1 from the reader device. t1 is the ideal transmission time when the ideal transmission distance d1 is first reached by the user.

In existing solutions, a user may, on the one hand, start the transmission at any point between 0 and t1 (starting time) while the distance between devices can be any value between d0 (starting position) and d1 (ideal distance). Therefore, we could assume that when the distance of two devices is d2 (chosen as an intermediate distance between d0 and d1), at time t2, the user will start the transmission. However, the reader device would not receive the transmission until the emitting device keeps moving to the idea position indicated by d 1. Therefore, during $\Delta t12$ (difference of time between t1 and t2), even if the user triggers the transmission with his user device, the reader receives nothing.

On the other hand, the user device may reach d1 ideal position before user starts transmission at a time t3, after the ideal time t1. During $\Delta t13$ (difference of time between t3 and t1), since nothing is transmitted from user device, nothing will be received by receiving device.

The here above prior techniques still rely heavily upon the user control and activation of the transmission, leaving room to an unreliable transmission.

There is still a need today to ensure further control over the transmission of data using carrier waves to as to compensate for the user poor estimate of the best transmission time. There is a further need to ensure the best transmission window for the transmitting device.

## SUMMARY OF THE PRESENT SYSTEM:

It is an object of the present system to overcome disadvantages and/or make improvements in the prior art.

The present system relates to a mobile device for transmitting data through wave transmission according to claim 1.

The mobile device of the present system relies upon the Applicant's observation that the user will intuitively estimate the ideal distance for transmission between his mobile device and a reader, recipient of the transmission. As a direct consequence he will reduce his speed as he approaches the reader device, and will stop the motion when at a relatively short distance in front of the reader. He may activate at some point during the approach (e.g. at the start, midway or right when stopping) the data transmission that will only be transferred when the mobile device monitored motion is sufficiently low, i.e. below a predefined threshold. Thus thanks to the present mobile device, the data transmission is decorrelated from the transmission activation, for instance at the user request.

The present system also relates to a method according to claim 6 and a computer program according to claim 8.

## BRIEF DESCRIPTION OF THE DRAWINGS:

The invention is explained in further detail, and by way of example, with reference to the accompanying drawings wherein:

FIG. 1 shows a mobile device in accordance with an embodiment of the present system;
FIG. 2A shows a graph of transmission windows for existing solutions;
FIG. 2B shows a graph of a transmission window in accordance with an embodiment of the present system;
FIG. 3 shows an exemplary illustration of spatial movements of the mobile device in accordance with an embodiment of the present system;
FIGs. 4A-4B show an exemplary flowchart in accordance with an embodiment of the present method; and,
FIG. 5 shows a mobile device in accordance with another embodiment of the present system.

## DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

For purposes of simplifying a description of the present system, the terms "operatively coupled", "coupled" and formatives thereof as utilized herein refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof. For example, an operative coupling may include a wired and/or wireless coupling to enable communication through a transmission between a mobile device and another electronic device such as a reader. A further operative coupling, in accordance with the present system, may include one or more couplings between two or more mobile devices via a carrier wave transmission - wave transmission in short - in accordance with an embodiment of the present system. An operative coupling may also relate to an interaction between program portions and thereby may not describe a physical connection so much as an interaction based coupling.

The term rendering and formatives thereof as utilized herein refer to providing content, such as digital media or a graphical user interface (GUI), such that it may be perceived by at least one user sense, such as a sense of sight and/or a sense of hearing. For example, the present system may render a user interface on a touch display device so that it may be seen and interacted with by a user. The term rendering may also comprise all the actions required to generate a GUI prior to the display, like e.g. a map image or a GUI comprising a plurality of icons generated on a server side for a browser application on a mobile device.

The system, device(s), method, user interface, etc., described herein address problems in prior art systems. In accordance with an embodiment of the present system, a mobile device provides a GUI for controlling an application program through touch and motion inputs.

A graphical user interface (GUI) may be provided in accordance with an embodiment of the present system by an application running on a processor, such as part of a computer system of a mobile device and/or as provided by a network connected device, such as a web-based server hosting the application. The provided visual environment may be displayed by the processor on a display device of the mobile device, namely a touch sensitive panel (touch panel in short), which a user may use to provide a number of touch inputs of different types.

A GUI is a type of user interface which allows a user to interact with electronic devices such as computers, hand-held devices, household appliances, office equipment and the likes. GUIs are typically used to render visual and textual images which describe various visual metaphors of an operating system, an application, etc., and implemented on a processor/computer including rendering on a display device. Furthermore, GUIs can represent programs, files and operational functions with graphical images, objects, or vector representations. The graphical images can include windows, fields, dialog boxes, menus, icons, buttons, cursors, scroll bars, maps, etc. Such images can be arranged in predefined layouts, or can be created dynamically (by the device itself or by a web-based server) to serve the specific actions being taken by a user. In general, the user can select and/or activate various graphical images in order to initiate functions and tasks, i.e. controls, associated therewith. By way of example, a user  can select a button that opens, closes, minimizes, or maximizes a window, or an icon that launches a particular program. By way of another example, the GUI may present a typical user interface including a windowing environment and as such, may include menu items, pull-down menu items, pop-up windows, etc., that are typical of those provided in a windowing environment, such as may be represented within a Windows™ Operating System GUI as provided by Microsoft Corporation and/or an OS X™ Operating System GUI, such as provided on an iPhone™, MacBook™, iMac™, etc., as provided by Apple, Inc., and/or another operating system. By way of another example, the user may interact with a GUI to generate a message intended for another electronic device such as a device, that is transmitted through a user interaction with a transmission button rendered on the GUI.

In the description here after, an application program (AP) - or software - may be seen as any tool that functions and is operated by means of a computer, with the purpose of performing one or more functions or tasks for a user or another application program. To interact with and control an AP, a GUI of the AP may be displayed on the mobile device display.

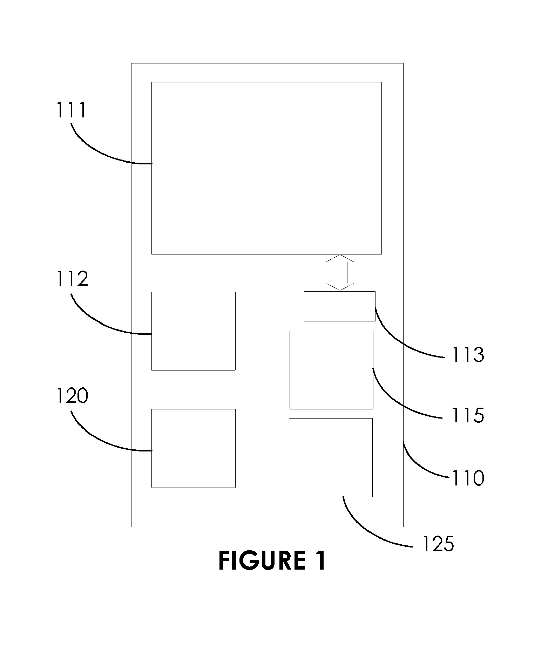

FIG. 1 is an illustration of an exemplary mobile device 110 used in the present system. The mobile device 110 comprises a display device 111, a processor 112, a controller 113 of the display device, a motion detector or sensor 120, a carrier wave emitter module 125 (to transmit data through carrier waves, i.e. through a wave transmission) and an input device 115.

The transmission of data in the here after application will be a carrier wave transmission (wave transmission in short), this may be for instance a radio-wave transmission, an electromagnetic wave transmission or a sound wave transmission. The wave transmission will also be referred to as a transmission trough/using carrier waves. A carrier wave or carrier is a waveform (usually sinusoidal) that is modulated (modified) with an input signal for the purpose of conveying information. The purpose of the carrier is usually either to transmit the information through space as an electromagnetic wave (as in radio communication), or to allow several carriers at different frequencies to share a common physical transmission medium by frequency division multiplexing.

In the present system, the user interaction with and manipulation of the application program rendered on a GUI is achieved using:

-    the display device 111, or screen, which is presently a touch panel operationally coupled to the processor 112 controlling the displayed interface, and

- the input device 115 such as a key panel when available on the mobile device 110.

Processor 112 may control the generation and the rendering of the GUI on the display device 111 (the information required to generate and manipulate the GUI resides entirely on the mobile device 110) or simply the rendering when the GUI is provided by a remote (i.e. network connected) device (the information, including in some instances the GUI itself is retrieved via a network connection).

The touch panel 111 can be seen as an input device allowing interactions with a finger of a user or other devices such as a stylus. Such an input device can, for example, be used to make selections of portions of the GUI of the AP, for instance a transmission button or icon displayed on the GUI. The input received from a user's touch is sent to the processor 112. The touch panel is configured to detect and report the (location of the) touches to the processor 112 and the processor 112 can interpret the touches in accordance with the application program and the currently displayed GUI. For example, the processor 112 can initiate a task, i.e. a control of the AP, in accordance with a particular touch, such as initiating the transmission according to the present method, once a touch input is received on the transmission button mentioned here above.

The controller 113, i.e. a dedicated processor, can be used to process touches locally and reduce demand for the main processor 112 of the computer system. The touch panel 111 can be based on sensing technologies including but not limited to capacitive sensing, resistive sensing, surface acoustic wave sensing, pressure sensing, optical sensing, and/or the likes. Here after, for simplification purpose, reference will be made to a finger of the user touching panel 111, other devices such as a stylus may be used in place of the user finger.

One or more motion sensors 120 are available, the reading of which are used by the processor 112 as illustrated here after. Most of the new devices, such as the smartphones or tablets released on the market over the recent years have some components embedded thereon to track movement and positioning, in other words motions. These features may be used as explained here after to trigger the data transmission when the device is in relevant position for transmission.

A carrier wave emitter module 125, driven by software implemented in the main processor 112, is also provided to ensure the transmission of data through carrier waves as illustrated here after.

Indeed, thanks to the present method, the accuracy of the transmission timing may be dramatically improved if the signal or data transmission stars when the emitting device, presently the mobile device 110, is in range of reception by the receiving device. As the natural way for using near field devices or modules is to move the emitting user device to an immobile position close to the remote reader, the detection of that fixed position will be used by the present system to a triggering event to actually start the transmission. Thus the transmission time is reduced as the transmission becomes more reliable.

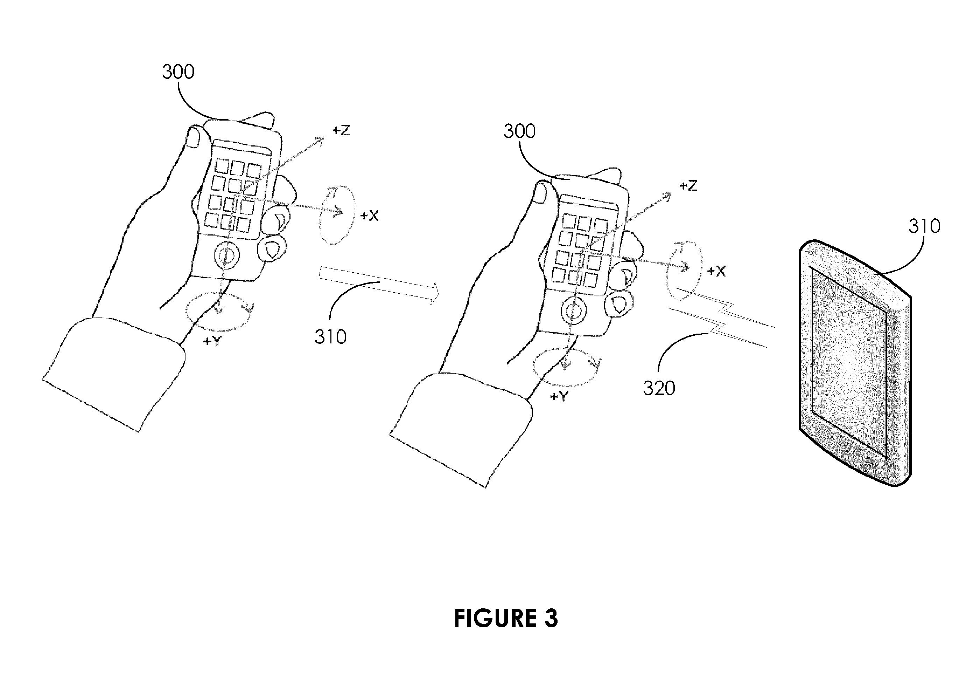

FIG. 3 is an illustrative embodiment of the present system. A user, carrying his mobile device 300 in his hand moves the device 300 in a direction 310 towards a reading device 310, such as a receiver with an IR reader, or microphone, depending on the transmission carrier technology. The mobile or emitting device 300 will be illustrated here after providing sound based transmissions, using its microphone and embedded conversion (to sound waves) software. The teaching of the present system may be applied to any transmission using carrier waves, such as electromagnetic carrier waves or sound based.

The mobile device of the present system relies upon the Applicant's observation that the user will intuitively estimate the ideal distance for transmission between his mobile device 300 and the reader 310. As a direct consequence he will reduce his speed as he approaches the reader device 310, and will stop the motion when at a relatively short distance in front of the reader 320. He may trigger at some point during the approach (e.g. at the start, midway or right when stopping) a transmission request to transmit data through sound waves to the reader 310, the transmission being illustrated with the waves 320.

As the correct distance is left to the user, what the present device will monitor is the motion so as to detect a somewhat stationary position that corresponds to the uses estimation of the right distance. The ideal time for transmission will correspond to that stationary position is detected, even if the transmission request has been triggered beforehand by the user. In the present system, the motion and speed reduction will be monitored thanks to motion sensors 120 of FIG. 1 once the user activates the data transmission. The transmission will be delayed till the motion sensors report the stationary state as explained here after.

Gesture detection has long been researched by many companies and academics across the globe. For instance, Applicant's co pending EP1974261 describing a mobile device to impart a control on an AP through gesture inputs that are identified by the device. Similarly, in "Beatbox Music Phone: Gesture-based Interactive Mobile Phone using a Tri-axis Accelerometer" published by Samsung Advance Institute of Technologies, a mobile phone features a tri-axis accelerometer to detect a series of predefined gestures or motions quite accurately and initiate some gesture associated actions on the mobile phone.

Referring back to FIG. 1, the present system further comprises a motion detector 120 to produce an output indicative, for instance raw data, of the mobile device motion, output that can be processed by processor 112. Motion detector 120 may for instance comprise a multidirectional or 3D accelerometer. Such a motion detector is capable of detecting rotations and translations of the mobile device. The use of a 3D accelerometer allows a more complete monitoring of the mobile device motions in some instances. Motion detector 120 may also comprise one or more of a camera, rangefinder (ultrasound or laser for instance), compass (magnetic detection) and/or gyroscope.

The terminology used here after to describe the mobile device motions is that of a standard 3-dimensional Cartesian coordinate system, one that extends the 2-dimensional coordinate space of the device's touch panel 111. While the touch panel's coordinate system may rely upon screen pixels as the unit of measurement, the motion detector's coordinate system will rely upon units of gravity (Gs) when accelerometers are used. In the here after description, the present system will be illustrated using a 3D accelerometer, reporting acceleration values (gx, gy, gz), but the present teaching may be readily transposed to any motion detector used by the man skilled in the art. As illustrated in FIG. 3, showing the user's left hand carrying the mobile device 110, the panel or screen's horizontal aspect is its X axis, and its vertical aspect is its Y axis. The top-left corner of the screen may for instance be chosen as its zero point. FIG. 3 shows this coordinate system in relation to the device.

A mobile device at rest on a flat surface, oriented to face the user, would have zero acceleration along its X or Y axis. The device's screen faces its Z axis, with motions in the direction the screen is facing defined as positive. Thus a device at rest on a flat surface would have an acceleration of -1 along its Z axis, representing the Earth's gravitational pull.

Based on the referential illustrated in FIG. 3, tilting the device onto its right edge, perpendicular to the surface, in the direction of its X axis, rotating it along its Y axis, would result in acceleration of 1 x, 0y, 0z. Reversing the tilt to the left would result in an acceleration of -1x, 0y, 0z. Likewise, tilting the device onto its bottom edge, perpendicular to its main surface (the screen), in the direction of its Y axis, rotating it along its X axis, would result in an acceleration of 0x, 1y, 0z. Reversing the tilt onto the top edge would result in an acceleration of 0x, -1y, 0z.

Measurements along any axis could of course fall outside the -1 to 1 range. A device that rests face down on a surface would have an acceleration of 0x, 0y, 1z. If it falls freely towards the Earth oriented in the same manner, its acceleration would be 0x, 0y, 2z. A user snapping the device more forcefully towards the Earth can exceed 2x.

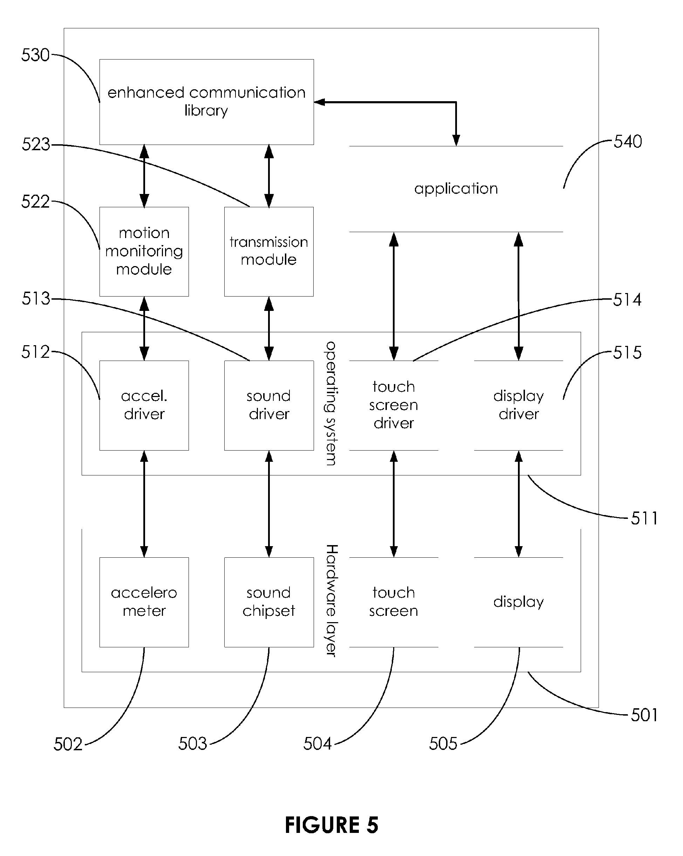

In the present system, the user will interact with an application resident on his mobile device, an application that requires at some points of its interaction with the user a data transmission using a carrier wave transmission, transmission influenced by the motion sensor reading. This requires a number of components organized in different layers and acting in concert as illustrated in FIG. 5.

The hardware layer 501 of the mobile device 500 may comprise different hardware components on top of the mobile device processor and memories (not shown on FIG. 5):

- a 3D accelerometer 502 as mentioned before, to measure accelerations along the x-, y- and z-axis.
- a sound chipset 503 comprising a microphone and one or more speakers (not shown). The sound chipset 503 will be replaced by a electromagnetic wave generator when the present teachings are applied to other carrier waves,
- a touch panel 504 for interacting with the mobile device and different applications, such as an application providing the data transmission. Touch panel 504 is the component of the display 505 capable of sensing user input via pressure on the display (such as a user's finger), and;
- a (graphical) display 505 for displaying the different GUIs of APs running on the mobile device.

An operating system 511, such as Linux, acts as a host for applications that run on the mobile device 500. As a host, operating system 511 handles the details of the operations of the hardware layer 501 and includes device drivers 512 to 515 which make the hardware components accessible to higher-level software via application programming interfaces (APIs). As seen in FIG. 5, mobile device 500 makes use of four component drivers 512 to 515, which respectively correspond to hardware components 502 to 505:

- the accelerometer driver 512 for high level software to access the 3D accelerometer 502,
- the sound driver 513 for other (or same) high level software to access the sound chipset 503,
- the touch screen driver 514 to monitor the touch input on the touch panel 504, and;
- the display driver 515 for displaying the AP GUI on the mobile device display 505.

The sound driver 513 as well as the sound chipset 503 form together sound wave emitter module to ensure the data transmission and correspond to the carrier wave emitter module 125 of FIG. 1.

In this present illustration, the mobile device's accelerometer 502 may exposed as a Unix device file (for example /dev/input/accel), which permits accessing it through Unix I/O system calls (open, read, close). The file contains binary data which can be grouped into blocks, with each block containing information on which axis (x, y, or z) the block refers to and the value (in milli-g's) for the current acceleration along that axis. Existing accelerometers allow measurement range for each axis of $\pm 2.3g$, with a sensitivity of 18mg at a sample rate of 100Hz, meaning that new values are written to the accelerometer file every 10ms.

A motion monitoring module 522 accesses the accelerometer driver to monitor motion of the device 500 and compare the acceleration values to thresholds. A transmission module 523 ensures the conversion of a data message to instructions for the sound driver so that sounds waves corresponding to the data message can be emitted by the sound chipset, namely its speaker(s).

An enhanced communication library 530 and a transaction application 540 are further high level software available in the present mobile device 500. The application is as mentioned before an application that the user can interact with using the touch interface or touch screen 504 and that will require at some point one or more data transmission according to the present system. The application 540 can interact with the enhanced communication library 530 which is a software component that decorrelates the user input (to request the transmission) from the actual transmission. In other words, it is the software component that takes over the control of the data transmission once requested by the user. Thus the library 530 is in charge of monitoring the motion of the mobile device and selecting the optimal moment from transmission based on the sensor readings are reported by the motions sensors. To do so, it drives the motion monitoring module 522 and the transmission module 523.

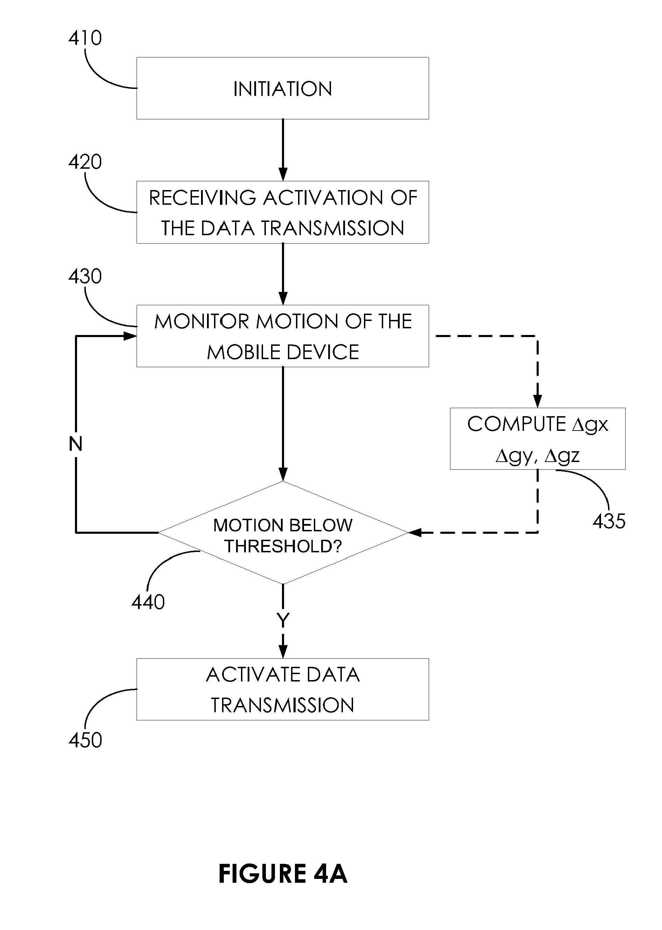

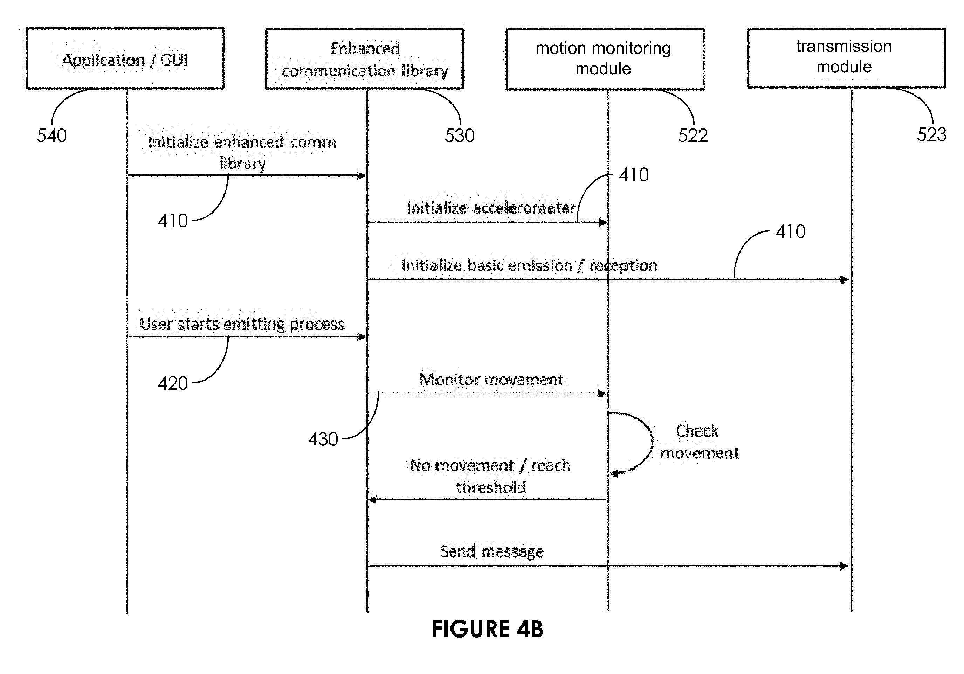

FIGs. 4A and 4B show illustrative process flow diagrams in accordance with an embodiment of the present system as seen in FIG. 5. While FIG. 4A shows the different acts of the present method, FIG. 4B shows the different interactions between the mobile device components.

An application program is running on the processor of the mobile device 500. Such an AP may for a payment application like the one offered today by Naratte™, that requires at some point a data transmission over a sound wave carrier to a reader device.

In a preliminary act 410, the user will start or the application. As seen in FIG. 4B, the triggering 410 of the AP will comprise different initializations from the processor:

- initialization of the enhanced communication library 530,
- library 530 will as a consequence initialize the accelerometer driver 512 and the accelerometer 502 (through the motion monitoring module 522) and the sound driver 513 and sound chipset 503 (through the transmission module 523).

The GUI may present to the user a plurality of portions for imparting different controls of the AP. Such portions of the GUI may include a control button for triggering a data transmission resulting from the different interactions of the user with the AP. The data transmission will be carried out through carrier waves.

In a further act 420 of FIG. 4A, the processor of the mobile device 500 will receive an activation of the data transmission, for instance through a user input on a control button. Alternatively, the transmission activation may be the result of an automated process resulting from the application execution. This is illustrated in FIG. 4B with the application 540 informing the enhanced communication library 530 of the transmission activation.

In a further act 430, the enhanced communication library 530 will start monitoring the mobile device motion through the motion monitoring module 522. For instance, when the motion is monitored using only the accelerometer, it will request periodic acceleration readings (gx, gy, gz) from the accelerometer sensor 502 through the accelerometer driver 512. One may note that the monitoring may have started before for other reasons but not necessarily linked to the present method. Act 430 marks an active monitoring for the present method so as to determine when the device comes to a somewhat stationary position.

The monitoring of the motion may be carried out in different ways, depending on how the stationary position or status is verified (in subsequent act 440). For instance, it may correspond to:

- monitoring the acceleration instantaneous values g(t) over a predefined period of time $\Delta T$. To do so, motion is captured periodically through the acceleration readings and the instantaneous acceleration value g(t) may be calculated as follows:

$$g(t) = \sqrt{gx(t)^2 + gy(t)^2 + gz(t)^2}$$

the average value over $\Delta T$ may then be calculated as:

$$\overline{g(t)} = \sqrt{gx(t)^2 + gy(t)^2 + gz(t)^2} \quad t \in [T, T + \Delta T)$$

- monitoring as illustrated in optional act 435 in FIG. 4A the acceleration variation between t-$\delta$t and t. To do so, the acceleration instantaneous values are captured at the two distinct moments t-$\delta$t and t, and the monitoring may comprise the determination of the acceleration variation $\delta g(t)$:

$$\delta g(t) = \sqrt{[gx(t) - gx(t - \delta t)]^2 + [gy(t) - gy(t - \delta t)]^2 + [gz(t) - gz(t - \delta t)]^2}$$

In a further act 440, the motion monitoring module 522 will verify if the monitored motion of act 430 is below a predefined threshold. It may consist in checking if the average acceleration $\overline{g(t)}$ over the window period of time $\Delta T$ is below an acceleration threshold g0:

$$\overline{g(t)} \leq g0$$

Alternatively, when the acceleration variation is monitored, it may consist in checking if $\delta g(t)$ is below an acceleration variation threshold.

$$\delta g(t) \leq \delta g0$$

Overall, by comparing several snapshots (window) of the acceleration within a certain time period (average acceleration or acceleration variation), the enhanced communication library 530 can conclude whether the mobile device 500 is (substantially) stationary or not.
The motion monitoring here is illustrated through the acceleration, but provided other sensors are also available, the motion monitoring may be more complex, like involving image analysis, compass readings ...
More generally, other stationary status verifications are known from the man skilled in the art. For instance, patent application US2010312473 discloses an advanced method for determining whether an object is stationary using:

- least mean values of the accelerometer raw data over a predetermined time length,
- subtracting this least mean value to the accelerometer raw data over a fixed time window to obtain a difference,
- determining a stationary status of the object if the difference is below a threshold value.

Such an approach, using for instance MEMS (Microelectromechanical systems) for the accelerometer, may be useful to eliminate unwanted motions like  shaky hands from a user as it eliminates any background motion that comes to offset the stationary determination.
Alternatively, a training phase may be used to help recognize a stationary state of the mobile device for the user, as again, each user will have his own way of holding the mobile device still in front of the sound wave reader.
Going back to the embodiment of FIG. 4, provided the monitored motion is below the motion threshold (answer Yes to act 440), the enhanced communication library will conclude that the mobile device is now stationary and will proceed with activating, i.e. enabling the data transmission. To do so, it will request the transmission module 523 to perform the data conversion to commands for the sound driver 513, and the module 523 will subsequently drive the sound chipset to perform the actual transmission. Provided the monitored motion is not below the motion threshold (answer No to act 440), the monitoring of the motion will resume in act 430 with further motion capture.
The conversion from data to carrier waves will use techniques known to the man skilled in the art, which are beyond the scope of the present application.
FIG. 2B corresponds to the FIG. 2A, but for a mobile device implemented the present method. Since the present system does not rely upon human intervention to start the transmission (only the transmission activation request), an untimely transmission can be avoided. If the motion threshold is low enough, the transmission will be triggered when the mobile device reaches a position near or at the ideal one d1. The transmission may be sent at the time t2, corresponding to a distance d2 close to d1, distance where the user stabilizes the mobile device position, resulting in low acceleration readings. If the time window to measure the acceleration is large enough so as the make sure the mobile device is substantially immobile, the triggering may occur after the ideal time t1. Nevertheless, in both instances, the time differences with t1, namely $\Delta$t12 and $\Delta$t13 are significantly reduced from known solutions illustrated in FIG. 2A.

The choice of the time window (AT, $\delta$t) as well as the motion threshold are system parameters that can be adjusted to improve the performance of the present data transmission.

Finally, the above discussion is intended to be merely illustrative of the present system and should not be construed as limiting the appended claims to any particular embodiment or group of embodiments. Thus, while the present system has been described with reference to exemplary embodiments, such as sound based data transmission, it should also be appreciated that numerous modifications and alternative embodiments may be devised by those having ordinary skill in the art without departing from the broader and intended spirit and scope of the present system as set forth in the claims that follow. Further, while exemplary sound based communications were provided to facilitate an understanding of the present system, other carrier wave based communications may be provided in accordance with further embodiments of the present system. For instance, sound chipset 503 and sound driver 513 may be replaced respectively with an IR light emitting diode (LED) and a LED driver.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:

a) the word "comprising" does not exclude the presence of other elements or acts than those listed in a given claim;

b) the word "a" or "an" preceding an element does not exclude the presence of a plurality of such elements ;

c) any reference signs in the claims do not limit their scope;

d) several "means" may be represented by the same item or hardware or software implemented structure or function;

e) any of the disclosed elements may be comprised of hardware portions (e.g., including discrete and integrated electronic circuitry), software portions (e.g., computer programming), and any combination thereof;

f) hardware portions may be comprised of one or both of analog and digital portions;

g) any of the disclosed devices or portions thereof may be combined together or separated into further portions unless specifically stated otherwise;

h) no specific sequence of acts or steps is intended to be required unless specifically indicated; and

i) the term "plurality of" an element includes two or more of the claimed element, and does not imply any particular range of number of elements; that is, a plurality of elements may be as few as two elements, and may include an immeasurable number of elements.

## Claims

1. A mobile device for transmitting data through wave transmission, the mobile device comprising a motion sensor and a wave emitter module, the mobile device comprising a processor arranged to:

   - receive activation of a data transmission through wave transmission,
   - monitor motion of the electronic device using the motion sensor,
   - activate the data transmission using the wave emitter module when the monitored motion is below a preset motion threshold.

2. The mobile device according to claim 1, further arranged to:

   - capture motion at distinct moments using the motion sensor,
   - monitor motion through the determination of the variation of the captured motions,
   and wherein the preset motion threshold corresponds to a motion variation threshold.

3. The mobile device according to one of the previous claims, wherein the wave transmission is sound wave transmission.

4. The mobile device according to one of the previous claims 1 to 2, wherein the wave transmission is electromagnetic wave transmission.

5. The mobile device according to one of the previous claims, wherein the motion sensor is an accelerometer.

6. A method for transmitting data through wave transmission using a mobile device, the mobile device comprising a motion sensor and a wave emitter module, the method being carried out by the mobile device and comprising:

   - receiving activation of a data transmission through wave transmission,
   - monitoring motion of the electronic device using the motion sensor,
   - activating the data transmission when the monitored motion is below a preset motion threshold.

7. The mobile device according to claim 6, wherein monitoring motion comprises determining the variation of captured motion at distinct moments, the preset motion threshold corresponding to a motion variation threshold.

8. An application embodied on a computer readable medium and arranged to transmit date through carrier waves according to the method of claims 6 to 7.

**FIGURE 1**

**FIGURE 2A**
**(prior art)**

**FIGURE 2B**

**FIGURE 3**

EP 2 680 552 A1

410 → INITIATION

420 → RECEIVING ACTIVATION OF THE DATA TRANSMISSION

430 → MONITOR MOTION OF THE MOBILE DEVICE

COMPUTE Δgx Δgy, Δgz

435

440 → MOTION BELOW THRESHOLD?

N

Y

450 → ACTIVATE DATA TRANSMISSION

**FIGURE 4A**

**FIGURE 4B**

EP 2 680 552 A1

530 — enhanced communication library

540 — application

523 —

522 — motion monitoring module

transmission module

operating system

513 —

514 —

512 — accel. driver

sound driver

touch screen driver

display driver

515 —

511 —

Hardware layer

accelero meter

sound chipset

touch screen

display

501 —

502 —

503 —

504 —

505 —

**FIGURE 5**

**EUROPEAN SEARCH REPORT**

Application Number

EP 12 30 5784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/017799 A1 (THORN OLA [SE]) 15 January 2009 (2009-01-15) * abstract * * figures 1a,1d,2 * * paragraph [0004] - paragraph [0005] * * paragraph [0009] - paragraph [0011] * * paragraph [0020] * * paragraph [0024] - paragraph [0039] * * paragraph [0060] - paragraph [0064] * ----- | 1-8 | INV. H04M1/725 |
| X | US 2011/081923 A1 (FORUTANPOUR BABAK [US] ET AL) 7 April 2011 (2011-04-07) * abstract * * figures 1,4,11,24 * * paragraph [0004] - paragraph [0007] * * paragraph [0039] * * paragraph [0044] * * paragraph [0064] * ----- | 1-8 | |
| X | DE 10 2009 027816 A1 (ART & COM AG [DE]) 20 January 2011 (2011-01-20) * abstract * * paragraph [0005] - paragraph [0006] * * paragraph [0022] - paragraph [0026] * ----- | 1-8 | TECHNICAL FIELDS SEARCHED (IPC) H04M |
| X | US 2006/256074 A1 (KRUM DAVID M [US] ET AL) 16 November 2006 (2006-11-16) * abstract * * figures 1-2 * * paragraph [0012] - paragraph [0025] * ----- | 1-8 | |

The present search report has been drawn up for all claims

| Place of search | Date of completion of the search | Examiner |
|---|---|---|
| Munich | 15 January 2013 | Kim-Mayser, Michael |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 12 30 5784

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2013

| Patent document cited in search report | Publication date | Patent family member(s) | | Publication date |
|---|---|---|---|---|
| US 2009017799 A1 | 15-01-2009 | CN | 101743739 A | 16-06-2010 |
| | | EP | 2177017 A1 | 21-04-2010 |
| | | US | 2009017799 A1 | 15-01-2009 |
| | | WO | 2009010312 A1 | 22-01-2009 |
| US 2011081923 A1 | 07-04-2011 | CN | 102549574 A | 04-07-2012 |
| | | CN | 102667762 A | 12-09-2012 |
| | | EP | 2483810 A1 | 08-08-2012 |
| | | EP | 2483811 A2 | 08-08-2012 |
| | | KR | 20120062014 A | 13-06-2012 |
| | | KR | 20120062929 A | 14-06-2012 |
| | | US | 2011081923 A1 | 07-04-2011 |
| | | US | 2011083111 A1 | 07-04-2011 |
| | | WO | 2011041427 A2 | 07-04-2011 |
| | | WO | 2011041434 A1 | 07-04-2011 |
| DE 102009027816 A1 | 20-01-2011 | DE | 102009027816 A1 | 20-01-2011 |
| | | EP | 2454894 A1 | 23-05-2012 |
| | | US | 2012282859 A1 | 08-11-2012 |
| | | WO | 2011007010 A1 | 20-01-2011 |
| US 2006256074 A1 | 16-11-2006 | EP | 1880265 A1 | 23-01-2008 |
| | | US | 2006256074 A1 | 16-11-2006 |
| | | WO | 2006127270 A1 | 30-11-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1974261 A

- US 2010312473 A

**Non-patent literature cited in the description**

- Beatbox Music Phone: Gesture-based Interactive Mobile Phone using a Tri-axis Accelerometer. Samsung Advance Institute of Technologies